# EUROPÄISCHE PATENTSCHRIFT

(11) **EP 0 997 587 B1**
(45) Veröffentlichungstag und Bekanntmachung des Hinweises auf die Patenterteilung: **26.02.2003**
(21) Anmeldenummer: 99810913.6
(22) Anmeldetag: 07.10.1999
(51) Int. Cl.: E04C 3/08, F16B 37/04, E04B 1/58, F16B 7/18, F16B 7/04

(54) **Verbindungselement für Montageschienen**
Connecting device for mounting rails
Dispositif pour la connexion des rails

(30) Priorität: 26.10.1998 DE 19849201
(43) Veröffentlichungstag der Anmeldung: 03.05.2000
(73) Patentinhaber: HILTI Aktiengesellschaft, 9494 Schaan (LI)
(72) Erfinder: Dischinger, Jakob, 82272 Eismerszell (DE); Mirsberger, Helmut, 81377 München (DE)
(74) Vertreter: Wildi, Roland

(56) Entgegenhaltungen:
- EP-A- 0 798 505
- WO-A-97/25541
- CH-A- 660 061
- GB-A- 1 566 914
- US-A- 5 144 780

## Beschreibung

Die Erfindung betrifft ein Verbindungselement für Montageschienen, deren Seitenwände bzw. Rückwand mit in regelmässigen Abständen angeordneten, genormten Lochungen versehen sind.

In der Haustechnik kommen vielfach Montageschienen zur Anwendung, die einen im wesentlichen C-förmigen Querschnitt aufweisen. Die C-förmigen Montageschienen besitzen eine Rückwand und zwei davon abragende Seitenwände. Die Seitenwände begrenzen einen in Längsrichtung verlaufenden Einführschlitz. Die Seitenwände und ggf. auch die Rückwand sind in regelmässigen Abständen mit genormten Lochungen und dergleichen versehen, die der Anbindung bzw. der Durchführung von Gewindestangen und weiteren Bauteilen dienen können. Eine derartige Montageschiene ist beispielsweise aus der EP-A-0 798 505 bekannt. Die dort beschriebene Montageschiene besitzt einen etwa C-förmigen Querschnitt. Ihre in regelmässigen Abständen mit Lochungen versehenen Seitenwände weisen in Längsrichtung verlaufende Profilierungen auf. Die Profilierungen bilden im Inneren der Montageschiene hinterschnittene Vorsprünge.

Ferner ist aus der WO97/25541 ein Verbindungselement zur Verbindung von mit genormten Seiten- bzw. Rückwandlochungen versehenen Profilen mit einem blockartigen Körper bekannt. Der Körper weist eine Bohrung auf, deren Mittenachse parallel zu den Stirnflächen und etwa durch den von den Längen- und Breitenhalbierenden des Körpers gebildeten Schnittpunkt verläuft. Ausserdem weist das Verbindungselement an seinen Längsenden im wesentlichen parallel zueinander verlaufende Stirnflächen und zwei symmetrisch zueinander von den Stirnflächen abragende, jeweils auf einer Federzunge angeordnete Zapfen auf, die in Eingriff mit einem Profil bringbar sind.

Vielfach besteht der Wunsch, zwei oder mehrere Montageschienen miteinander zu verbinden. Beispielsweise können auf diese Weise Stützabhängungen für Luftschächte, Rohrleitungen oder auch für Kabeltrassen erstellt werden. Dazu wird eine der bekannten Montageschienen mit Ihrer Stirnseite an die Öffnungsseite einer weiteren Montageschiene gelegt. Die Verbindung der beiden Montageschienen erfolgt über einen speziell ausgebildeten Montagewinkel, der jeweils öffnungsseitig an den Montageschienen befestigbar ist. Zur Herstellung einer U-förmigen Abhängung wird im gewünschten Abstand von der ersten Montageschiene eine zweite Montageschiene mit ihrer Stirnseit an die Öffnungsseite der stützenden Montageschiene angelegt und analog zur ersten Montageschiene mit einem speziellen Montagewinkel befestigt. Die in Längsrichtung verlaufenden Einführschlitze der von der stützenden Montageschiene abragenden ersten und zweiten Montageschiene sind einander zugekehrt.

Während auf diese Weise sehr einfach eine Verbindung von zwei oder mehreren senkrecht zueinander angeordneten Schienen erfolgen kann, besteht doch der Wunsch nach einer grösseren Flexibilität der Lage, in der die miteinander zu verbindenden Montageschienen relativ zueinander angeordnet und miteinander verbunden werden können. So soll es auch möglich sein, Montageschienen miteinander zu verbinden, deren Öffnungsschlitze nicht unmittelbar zueinander benachbart sind. Beispielsweise kann der Wunsch oder die Notwendigkeit bestehen, eine der Montageschienen in einer um ihre Längsachse verdrehten Lage mit einer zweiten Montageschiene zu verbinden. Dabei soll es auch möglich sein, eine an einer Seitenwand bzw. an der Rückwand der stützenden Montageschiene angeordnete weitere Montageschiene zu befestigen. Es soll auch die Möglichkeit geschaffen werden, zwei mit ihren Stirnseiten aneinandergrenzende Montageschienen miteinander zu verbinden.

Die Lösung dieser Aufgaben besteht in einem Verbindungselement für Montageschienen, welches die im kennzeichnenden Abschnitt des Patentanspruchs 1 angeführten Merkmale aufweist. Das erfindungsgemässe Verbindungselement für mit genormten Seiten- bzw. Rückwandlochungen versehene Montageschienen besitzt einen blockartigen Körper, der an seinen Längsenden im wesentlichen parallel zueinander verlaufende Stirnflächen und zwei symmetrisch zueinander von den Stirnflächen abragende Zapfen aufweist. Die Zapfen besitzen einen grössten Durchmesser, der dem Durchmesser der Seitenwandlochungen der Montageschienen enspricht, und sind mit hinterschnittenen Seitenflächen versehen. Im Körper ist eine Bohrung vorgesehen, deren Mittenachse parallel zu den Stirnflächen und etwa durch den von den Längen- und Breitenhalbierenden des Körpers gebildeten Schnittpunkt verläuft.

Zum Verbinden zweier Montageschienen wird zunächst das erfindungsgemäss ausgebildete Verbindungselement durch den Öffnungsschlitz in das Innere einer der Montageschienen eingebracht. Danach wird es im Bereich des Stirnendes der Montageschiene über die hinterschnittenen Zapfen in die letzten beidseitigen Seitenwandlochungen der Montageschiene eingeclipst. Die zweite Montageschiene wird sodann mit einer ihrer Seitenwände, der Rückwand oder auch der Öffnungsseite an das Stirnende der ersten Montageschiene positioniert. Die Verbindung der beiden Montageschienen erfolgt über eine ausreichend lange Schraube, die beispielsweise einerseits durch eine Lochung in den Seitenwänden bzw. in der Rückwand durchgesteckt und andererseits durch die Bohrung des Verbindungselements geführt wird. Der Kopf der Schraube stützt sich an der Seitenwand bzw. der Rückwand ab. Zum Fixieren der beiden Montageschienen wird eine Mutter auf das aus der Bohrung des Verbindungselements ragenden Abschnitts der Schraube aufgeschraubt. Ist beabsichtigt, zwei Montageschienen mit aneinanderliegenden Stirnenden zu verbinden, werden beide Montageschienen im Endbereich mit den erfindungsgemässen Verbindungselementen ausgestattet. Zum Fixieren der beiden aneinandergefügten Montageschienen wird eine ausreichend lange Schraube durch die Bohrungen geführt und mit einer Mutter fixiert. Die Bohrungen der Verbindungselemente können einfach durch Verdrehen der Verbindungselemente aufeinander ausgerichtet werden. Die eingeclipsten Verbindungselemente versteifen die Montageschienen im Endbereich und wirken einer unerwünschten Verformung der Schiene entgegen.

Zur Erleichterung des Einclipsens des Verbindungselements in die genormten Seitenwandlochungen weist jeder Zapfen einen im wesentlichen kreisförmigen Querschnitt auf. Dabei erstrecken sich die hinterschnittenen Seitenflächen mit Vorteil über einen Winkelbereich, der grösser ist als 180° und 320° nicht überschreitet. Indem sich der hinterschnittene Abschnitt der Zapfen über einen Winkelbereich grösser als 180° erstreckt, ist ein sicherer Formschluss in den genormten Seitenwandlochungen gewährleistet. Die Begrenzung der Erstreckung der hinterschnittenen Seitenfläche auf einen Winkelbereich kleiner als 320° erleichtert die Montage und das Ausrichten des montierten Verbindungselements.

Es versteht sich, dass die Länge des Körpers des Verbindungselements und der von den Seitenflächen des Körpers abragenden Zapfen auf die jeweilige Montageschiene und den Abstand der Seitenwände abgestimmt ist. Die Mindestlänge jedes Zapfens entspricht der Wandstärke einer Schiene vermehrt um 0,5 mm. Vorzugsweise weist jeder Zapfen eine axiale Länge auf, die etwa 1 mm bis etwa 1,5 mm beträgt.

Der Neigungswinkel, unter dem die hinterschnittenen Längsseiten der Zapfen in die zugehörige Stirnseite des Körpers des Verbindungselements einmünden, beträgt mit Vorteil etwa 60° bis etwa 75°, damit auch bei Querbelastung der Montageschiene eine formschlüssige Verbindung der eingeclipsten Zapfen mit den Seitenwänden gewährleistet ist.

Aus fertigungstechnischen Gründen erweist es sich von Vorteil, wenn der Körper des Verbindungselements im wesentlichen zylindrisch ausgebildet ist. Als Herstellungsverfahren für den Verbinder können beispielsweise Aludruckguss, Grauguss oder ähnliche Verfahren eingesetzt werden.

Zur Erleicherung der Montage und zur besseren Ausrichtbarkeit des montierten Verbinders weist der zylindrische Körper eine abgeflachte Längsseite auf, die im Bereich des nicht hinterschnittenen Abschnitts der Seitenflächen der Zapfen verläuft und vorzugsweise senkrecht zur Bohrung im Körper orientiert ist.

Zur Vereinfachung der Befestigung ist die Bohrung im Körper des Verbindungselements mit einem Normgewinde versehen. Dabei kann die Mutter entfallen, die sonst auf das dem Kopf der Schraube gegenüberliegende Ende aufgeschraubt werden muss.

Im folgenden wird die Erfindung unter Bezugnahme auf schematisch dargestellte Ausführungsbeispiele näher erläutert. Es zeigen:
- Fig. 1: eine perspektivische Darstellung eines Ausführungsbeispiels des Verbindungselements;
- Fig. 2: eine Seitenansicht des Verbindungselements aus Fig. 1;
- Fig. 3: eine Stirnansicht des Verbindungselements aus Fig. 1;
- Fig. 4: eine Seitenansicht gemäss Fig. 2 eines modifizierten Verbindungselements;
- Fig. 5: einen Montageschritt eines Verbindungselements; und
- Fig. 6 - 8: Varianten der Verbindung von zwei Montageschienen mit einem oder mehreren Verbindungselementen gemäss Fig. 3.

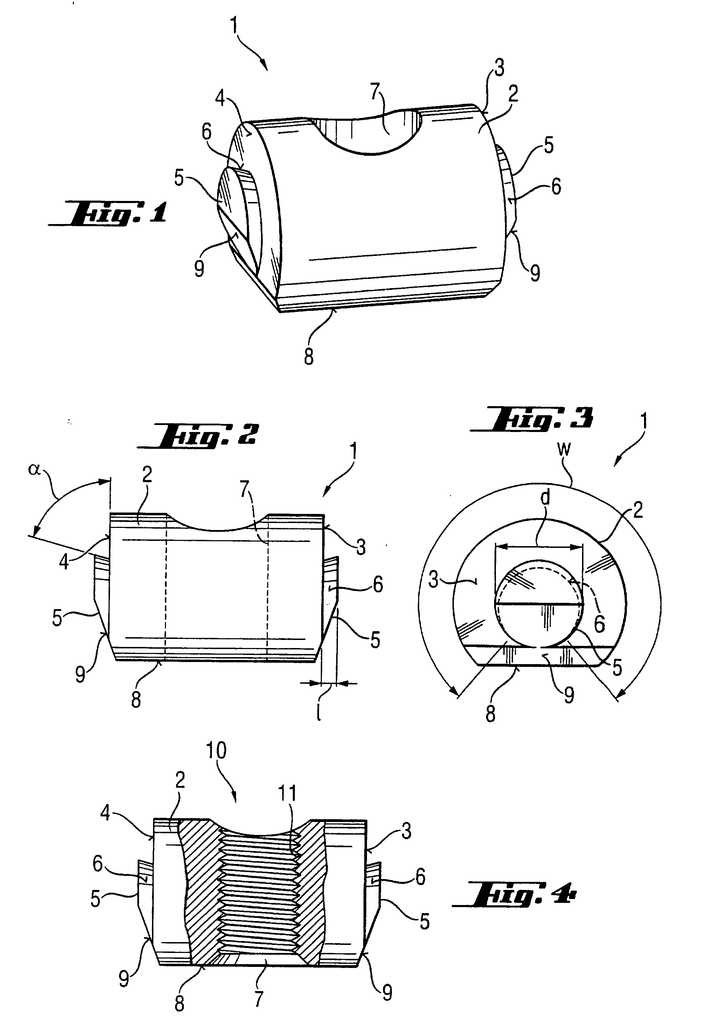

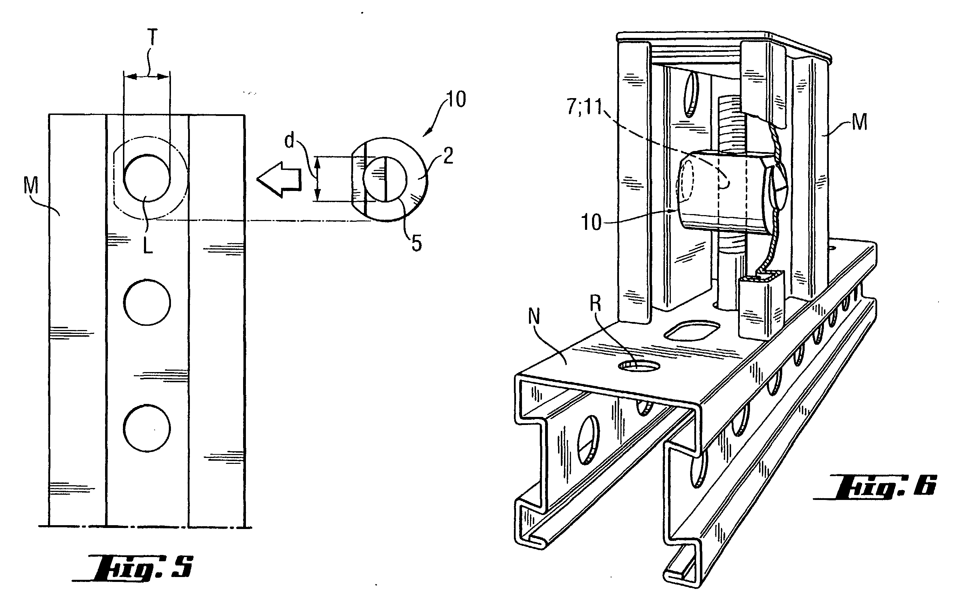

Das in Fig. 1 perspektivisch, in Fig. 2 in Seitenansicht und in Fig. 3 in Stirnansicht dargestellte Ausführungsbeispiels eines erfindungsgemässen Verbindungselements ist jeweils gesamthaft mit den Bezugszeichen 1 versehen. Es besitzt einen im wesentlichen zylindrischen Körper 2 mit parallel zueinander verlaufenden Stirnflächen 3 und 4. Die axiale Länge des Körpers ist auf den Abstand der Seitenflächen einer Montageschiene abgestimmt. Von jeder Stirnfläche 3, 4 ragt ein Zapfen 5 ab, dessen axiale Länge I mindestens der Wandstärke der Schiene vermehrt um 0,5 mm entspricht und vorzugsweise etwa 1 mm bis etwa 1,5 mm beträgt. Die Zapfen 5 weisen einen im wesentlichen kreisförmigen Querschnitt auf und besitzen eine hinterschnittene Seitenfläche 6, die mit der zugehörigen Seitenfläche 3, 4 des Körpers 2 einen Winkel α einschliesst, der etwa 60° bis etwa 75° beträgt. Die hinterschnittene Seitenfläche 6 erstreckt sich über einen Winkelbereich w, der grösser ist als 180°, aber kleiner als 320°. In unmittelbarer Nachbarschaft zu dem nicht hinterschnittenen Abschnitt 9 der Seitenfläche 6 der Zapfen 5 ist der Körper 2 mit einer Abflachung 8 versehen. Die Zapfen 5 besitzen einen grössten Durchmesser d, der dem Durchmesser von genormten Seitenwandlochungen von Montageschienen entspricht. Der Körper 2 ist von einer Bohrung 7 durchsetzt, die vorzugsweise senkrecht zu der Abflachung 8 des Körpers 2 angeordnet ist. Die Anordung der Bohrung ist derart gewählt, dass ihre Mittenachse im wesentlichen parallel zu den Stirnflächen 3, 4 verläuft. Vorzugsweise ist die Bohrung 7 derart vorgesehen, dass ihre Mittenachse den von den Längen- und Breitenhalbierenden des Körpers 2 gebildeten Schnittpunkt umfasst.

Das in Fig. 4 in Seitenansicht dargestellte zweite Ausführungsbeispiel des erfindungsgemässen Verbindungselements ist gesamthaft mit dem Bezugszeichen 10 versehen. Es enspricht in seinem Aufbau im wesentlichen dem in den Fig. 1 - 3 dargestellten ersten Ausführungsbeispiel 1 eines Verbindungselements. Aus diesem Grund sind gleiche Teile mit den gleichen Bezugszeichen versehen. Der Unterschied besteht darin, dass die Bohrung 7 im Körper 2 mit einem genormten Innengewinde versehen ist, das in Fig. 4 mit dem Bezugszeichen 11 angedeutet ist.

In den Fig. 1 - 4 weist der Körper 2 des Verbindungselements 1, 10 eine im wesentlichen zylindrisch Gestalt auf. Es versteht sich, dass der Körpers beispielsweise auch die Form eines Quaders aufweisen kann.

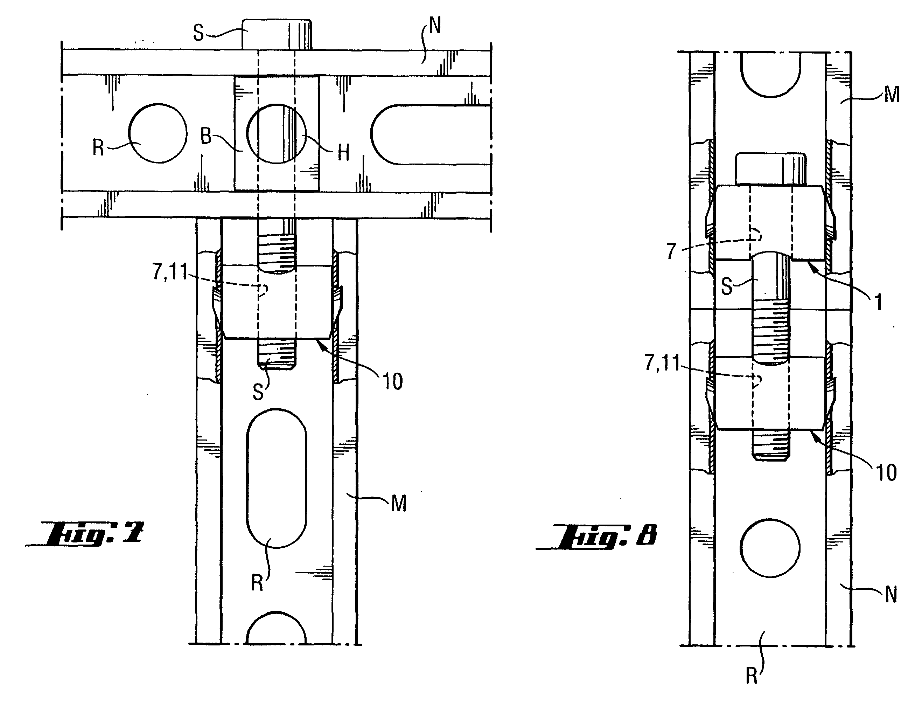

Fig. 5 zeigt einen Montageschritt eines Verbindungselements, beispielsweise eines Verbindungselements 10 gemäss Fig. 4, an einer Montageschiene M, deren Seitenwände mit Lochungen L versehen sind. Derartige Montageschienen sind beispielsweise in der EP-A-0 798 505 beschrieben, die hiermit zum integralen Bestandteil der vorliegenden Patentanmeldung erklärt wird. Die von den Stirnflächen des Körpers 2 des Verbindungselements abragenden Zapfen 5 werden durch den von den Seitenwänden der Montageschiene M begrenzten Öffnungsschlitz in die Schiene eingebracht und in die Lochungen L am stirnseitigen Ende der Montageschiene M eingeclipst. Der grösste Durchmesser d der Zapfen 5 entspricht dabei dem Durchmesser T der Seitenwandlochungen L, damit die Zapfen 5 einfach in die Lochungen gleiten und diese durchsetzen können.

In Fig. 6 ist eine Verbindung von zwei Montageschienen M, N dargestellt, bei der eine der Montageschienen N mit ihrer Rückseite gegen das Stirnende der ersten Montageschiene M angeordnet ist. Die erste Montageschiene M ist bereits mit einem Verbindungselement 10 ausgestattet, das gemäss dem in Fig. 5 angedeuteten Vorgang in die letzten beiden Seitenwandlochungen im Bereich des Stirnendes der Montageschiene M eingeclipst ist. Das Verbindungselement 10 ist derart ausgerichtet, dass ihrer Bohrung 7 mit einer Rückwandbohrung R in der zweiten Montageschiene N fluchtet. Die beiden Montageschienen M, N sind über eine Schraube S miteinander verbunden, die durch die Rückwandlochung R der zweiten Montageschiene N durchgesteckt und in die mit einem Innengewinde 11 versehene Bohrung 7 des Verbindungselements 10 eingeschraubt ist. Dabei stützt sich der Kopf der Schraube an der Rückwand der zweiten Montageschiene N ab. Für den Fall, dass die Rückwandlochung R der zweiten Montageschiene N grösser ist als der Kopfdurchmesser der Schraube S, kann eine geeignete Unterlagscheibe zur Verkleinerung der Durchtrittsöffnung verwendet sein.

Fig. 7 zeigt eine Variante einer Verbindung von zwei Montageschienen M, N, bei der die zweite Montageschiene N mit einer Seitenwand an das Stirnende der ersten Montageschiene M angeordnet ist, die bereits mit einem Verbindungselement 10 ausgestattet ist. Beide Montageschienen M, N sind mit den Öffnungsschlitzen dem Betrachter zugekehrt. Die Rückwandlochungen in beiden Montageschienen M, N sind jeweils mit dem Bezugszeichen R versehen. Die Bohrung des Verbindungselements ist derart ausgerichtet, dass sie mit den einander gegenüberliegenden Seitenwandlochungen der zweiten Montageschiene N fluchtet. Die Fixierung der beiden Montageschienen M, N erfolgt über eine Schraube S, die durch die Seitenwandlochungen der zweiten Montageschiene N durchgesteckt und in die Bohrung des in der ersten Montageschiene M montierten Verbindungselements 10 eingeschraubt ist. Prinzipiell könnte die Schraube auch nur durch die Seitenwandlochung einer der Seitenwände der zweiten Montageschiene geführt sein. Da dies jedoch nicht bei allen Schraubenlängen bewerkstelligbar ist, und um ungleichmässige Belastungen der Montageschiene zu vermeiden, erweist es sich als zweckmässig, die Schraube durch die einander gegenüberliegenden Lochungen beider Seitenwände zu führen. Wie es in Fig. 7 angedeutet ist, kann in der zweiten Montageschiene N ein quaderförmiger Montageblock B mit senkrecht zu seinen Seitenflächen verlaufenden Durchgangsbohrungen H vorgesehen sein, der verhindert, dass die zweite Montageschiene N beim Anziehen der Schraube S zusammengepresst wird.

Fig. 8 zeigt eine Situation, in der zwei Montageschienen M, N miteinander verbunden sind, die mit ihren Stirnenden aneinandergrenzen. Beide Montageschienen M, N sind im Bereich ihrer Stirnenden mit Verbindungselementen 1, 10 ausgestattet, die jeweils in das letzte Paar von Seitenwandlochungen eingeclipst sind. Beispielsweise handelt es sich bei dem Verbindungselement 1 in der ersten Montageschiene M um ein Ausführungsbeispiel mit gewindeloser Durchgangsbohrung gemäss Fig. 1 - 3, während das Verbindungselement 10 in der zweiten Montageschiene N dem Ausführungsbeispiel aus Fig. 4 entspricht und eine mit einem Innengewinde versehene Bohrung aufweist. Die Bohrungen der beiden Verbindungselemente 1, 10 sind aufeinander ausgerichtet. Die Fixierung der aneinandergefügten Montageschienen M, N erfolgt mit einer Schraube S, die durch die Bohrung des ersten Verbindungselements 1 durchgesteckt und in die mit einem Innengewinde versehene Bohrung des zweiten Verbindungselements eingeschraubt ist. Die in den Fig. 6 - 8 angedeuteten Verbindungsvarianten dienen nur der Illustration. Es versteht sich, dass das erfindungsgemässe Verbindungselement auch weitere Verbindungsarten ermöglicht, in der die relative Lage der Montageschienen zueinander variieren kann.

## Patentansprüche

1. Verbindungselement zur Verbindung von mit genormten Seiten- bzw. Rückwandlochungen (L, R) versehenen Montageschienen (M, N) mit einem blockartigen Körper (2), der eine Bohrung (7) aufweist, deren Mittenachse parallel zu den Stirnflächen (3, 4) und etwa durch den von den Längen- und Breitenhalbierenden des Körpers (2) gebildeten Schnittpunkt verläuft der an seinen Längsenden im wesentlichen parallel zueinander verlaufende Stirnflächen (3, 4) und der zwei symmetrisch zueinander von den Stirnflächen (3, 4) abragende Zapfen (5) aufweist, deren grösster Durchmesser (d) dem Durchmesser (T) der Seitenwandlochungen (L) der Montageschienen (M, N) entspricht, **dadurch gekennzeichnet, dass** der Körper (2) im wesentlichen zylindrisch ausgebildet ist und dass die Zapfen (5) mit hinterschnittenen Seitenflächen (6) versehen sind.

2. Verbindungselement nach Anspruch 1, **dadurch gekennzeichnet, dass** jeder Zapfen (5) einen im wesentlichen kreisförmigen Querschnitt besitzt und sich die hinterschnittenen Seitenfläche (6) über einen Winkelbereich (w) erstrecken, der grösser ist als 180° und 320° nicht überschreitet.

3. Verbindungselement nach Anspruch 1 oder 2, **dadurch gekennzeichnet, dass** jeder Zapfen (5) eine axiale Länge (I) aufweist, die mindestens der Wandstärke der Schiene (M, N) vermehrt um 0,5 mm entspricht und vorzugsweise etwa 1 mm bis etwa 1,5 mm beträgt.

4. Verbindungselement nach einem der vorangehenden Ansprüche, **dadurch gekennzeichnet, dass** die hinterschnittenen Seitenflächen (6) der Zapfen (5) unter einem Winkel (α) in die zugehörige Stirnfläche (3; 4) des Körpers (5) münden, der etwa 60° bis etwa 75° berträgt.

5. Verbindungselement nach einem der vorangehenden Ansprüche, **dadurch gekennzeichnet, dass** der Körper (2) im wesentlichen zylindrisch ausgebildet ist.

6. Verbindungselement nach Anspruch 2 und Anspruch 4, **dadurch gekennzeichnet, dass** der zylindrische Körper (2) eine abgeflachte Längsseite (8) aufweist, die im Bereich des nicht hinterschnittenen Abschnitts (9) der Seitenfläche (6) der Zapfen (5) verläuft und vorzugsweise senkrecht zur Bohrung (7) im Körper (2) orientiert ist.

7. Verbindungselement nach einem der vorangehenden Ansprüche, **dadurch gekennzeichnet, dass** die Bohrung (7) mit einem Normgewinde (11) versehen ist.

## Claims

1. Connecting element for connecting mounting rails (M, N), which are provided with standardised side and rear wall perforations (L, R), to a blocklike body (2) comprising a bore (7) the centre axis of which extends parallel to the end surfaces (3, 4) and approximately through the intersecting point as established by the longitudinal and width halves of the body (2), having at its longitudinal ends end surfaces (3, 4) which extend substantially parallel to each other, and with two pins (5) which project symmetrically to each other from the end surfaces (3, 4), the largest diameter (d) of which corresponds with the diameter (T) of the side wall perforations (L) of the mounting rails (M, N), **characterised in that** the body (2) is essentially of cylindrical design and the pins (5) are provided with undercut side surfaces (6).

2. Connecting element according to Claim 1, **characterised in that** each pin (5) has an essentially circular cross-section, and the undercut side surface (6) extends over an angular area (w) of more than 180° but not exceeding 320°.

3. Connecting element according to Claim 1 or 2, **characterised in that** each pin (5) has an axial length (I) corresponding at least with the wall thickness of the rail (M, N) increased by 0.5 mm and preferably of between approximately 1 mm and approximately 1.5 mm.

4. Connecting element according to one of the above claims, **characterised in that** the undercut side surfaces (6) of the pins (5) enter at an angle (α) into the associated end surface (3; 4) of the body (5) of between approximately 60° and approximately 75°.

5. Connecting element according to one of the above claims, **characterised in that** the body (2) is essentially of cylindrical design.

6. Connecting element according to Claim 2 and Claim 4, **characterised in that** the cylindrical body (2) comprises a flattened longitudinal side (8) which extends in the area of the not undercut section (9) of the side surface (6) of the pins (5) and which is preferably oriented perpendicularly to the bore (7) in the body (2).

7. Connecting element according to one of the above claims, **characterised in that** the bore (7) is provided with a standard thread (11).

## Revendications

1. Élément de liaison pour la liaison de rails de montage (M, N) pourvus de perforations normalisées de parois latérales, respectivement de paroi arrière (L, R), comprenant un corps en forme de bloc (2) qui est pourvu d'un trou (7), dont l'axe médian s'étend parallèlement aux faces frontales (3, 4) et passe sensiblement par le point d'intersection formé par les médianes en longueur et en largeur du corps (2), et qui comporte à ses extrémités longitudinales des faces frontales sensiblement parallèles l'une à l'autre (3, 4) et deux tourillons (5) qui dépassent des faces frontales (3, 4) de manière symétrique l'un à l'autre et dont le diamètre maximal (d) correspond au diamètre (T) des perforations de parois latérales (L) des rails de montage (M, N), **caractérisé en ce que** le corps (2) est de réalisation sensiblement cylindrique, et **en ce que** les tourillons (5) sont pourvus de surfaces latérales en contre-dépouille (6).

2. Élément de liaison selon la revendication 1, **caractérisé en ce que** chaque tourillon (5) possède une section transversale sensiblement circulaire et la surface latérale en contre-dépouille (6) s'étend sur une zone angulaire (w) qui est supérieure à 180° et n'excède pas 320°.

3. Élément de liaison selon la revendication 1 ou 2, **caractérisé en ce que** chaque tourillon (5) présente une longueur axiale (1) qui correspond au moins à l'épaisseur de paroi du rail (M, N) majorée de 0,5 mm et qui, de préférence, est d'environ 1 mm à environ 1,5 mm.

4. Élément de liaison selon une des revendications précédentes, **caractérisé en ce que** les surfaces latérales en contre-dépouille (6) des tourillons (5) débouchent dans la face frontale correspondante (3 ; 4) du corps (5) selon un angle (α) qui est d'environ 60° à environ 75°.

5. Élément de liaison selon une des revendications précédentes, **caractérisé en ce que** le corps (2) est de réalisation sensiblement cylindrique.

6. Élément de liaison selon la revendication 2 et la revendication 4, **caractérisé en ce que** le corps cylindrique (2) présente un côté longitudinal aplati (8) qui s'étend dans la zone de la portion sans contre-dépouille (9) de la surface latérale (6) des tourillons (5) et est orienté de préférence perpendiculairement au trou (7) dans le corps (2).

7. Élément de liaison selon une des revendications précédentes, **caractérisé en ce que** le trou (7) est pourvu d'un filetage normalisé (11).
